# EUROPÄISCHE PATENTSCHRIFT

(11) **EP 0 187 784 B1**
(45) Veröffentlichungstag und Bekanntmachung des Hinweises auf die Patenterteilung: **17.03.1993**
(21) Anmeldenummer: 85903219.5
(22) Anmeldetag: 04.07.1985
(51) Int. Cl.: G01M 5/00

(54) **PRÜFVORRICHTUNG FÜR STABFORMIGE BAUTEILE, INSBESONDERE TRAGWERKSABSCHNITT DES INGENIEURBAUS**
TESTING DEVICE FOR BAR-LIKE ELEMENTS, PARTICULARLY A FRAMEWORK SEGMENT CARRYING AN ENGINEERING CONSTRUCTION
DISPOSITIF D'ESSAI POUR ELEMENTS EN FORME DE BARRE, EN PARTICULIER UN SEGMENT D'OSSATURE PORTEUSE D'UN OUVRAGE D'ART

(30) Priorität: 10.07.1984 DE 3425359
(43) Veröffentlichungstag der Anmeldung: 23.07.1986
(73) Patentinhaber: MAIER, Wolfgang, Dr.-Ing., D-38104 Braunschweig (DE)
(72) Erfinder: MAIER, Wolfgang, Dr.-Ing., D-38104 Braunschweig (DE)
(74) Vertreter: Gramm, Werner, Prof., Dipl.-Ing.
(86) Internationale Anmeldenummer: DE8500228
(87) Internationale Veröffentlichungsnummer: WO8600702

(56) Entgegenhaltungen:
- US-A- 2 446 566

## Beschreibung

Die Erfindung betrifft eine Prüfvorichtung für stabförmige Bauteile, insbesondere Tragwerksabschnitte des Ingenieurbaus, im wesentlichen bestehend aus einem Prüfgestell mit wenigstens einer Widerlageranordnung zur Abstützung der auf das zu prüfende Bauteil wirkenden Kräfte, aus wenigstens einem mit einer Antriebsvorrichtung verbundenen verschiebbaren Lastkopf zur Einleitung der Lasten in das Bauteil, sowie aus Meßeinrichtungen zur Bestimmung der von der Antriebseinrichtung auf den Lastkopf aufgebrachten Kraftgrößen.
Mit den bekannten Prüfvorrichtungen werden die zu prüfenden Bauteile auf Zug oder Druck belastet, wobei die Lasten an den beiden Endflächen der Bauteile in diese eingeleitet werden. Die zu prüfenden Bauteile sind aus einem Tragwerk herausgeschnittene Tragwerksabschnitte, deren Tragverhalten zu bestimmen sind. Die Randbedingungen der Bauteile, das sind die Übergangsbedingungen zwischen dem Tragwerksabschnitt und dem übrigen Tragwerk, sind in ihrer Vielfalt stark beschränkt und werden durch mechanische Lager realisiert.

Bei den bekannten Prüfvorrichtungen ist eine feste Widerlageranordnung vorgesehen, an der das Bauteil einendig befestigt ist, während das andere Ende des Bauteils sich auf den Lastkopf abstützt. Um Bauteile unterschiedlicher Länge prüfen zu können, ist der Abstand zwischen dem festen Widerlager und dem Lastkopf einstellbar.

Nachteilig ist bei den bekannten Prüfvorrichtungen, daß als Lastkopf nur mechanische Lager für einfache Randbedingungen erhältlich sind. Eine starre Einspannung des Bauteils ist auf einfache Art nicht möglich. Eine gelenkige Lagerung erfordert beispielsweise ein aufwendiges Kalottenlager, welches zur Vermeidung von Reibung mit einer Hochdruckschmierung ausgerüstet ist. Lager für Randbedingungen, die Lastabhängig sind, können bei den bekannten Prüfvorrichtungen nicht realisiert werden.

Der Erfindung liegt die Aufgabe zugrunde, eine Prüfvorrichtung der einleitend genannten Art so weiterzubilden, daß sämtliche lastabhängigen Randbedingungen einstellbar sind.

Die Lösung der Aufgabe kennzeichnet sich erfindungsgemäß durch die Merkmale des Anspruchs 1.

Da der Lastkopf in Abhängigkeit von der Anzahl der gewählten Freiheitsgrade mit seiner Auflagerfläche für das zu prüfende Bauteil räumlich beliebig verschiebbar ist, kann zu jedem Zeitpunkt der Bauteilprüfung jede beliebige Randbedingung des Bauteils realisiert werden. Hierzu ist es erforderlich, daß das Bauteil an seiner Schnittfläche mit dem Lastkopf fest verbunden ist und dieser durch die Antriebseinrichtung räumlich beliebig verstellbar ist. Durch Bestimmung der mittels der Antriebseinrichtung auf den Lastkopf aufgebrachten Kraftgrößen nach Betrag und Richtung und gleichzeitige Messung der räumlichen Verschiebung der Auflagerfläche bzw. der Auflagerpunkte des Bauteils auf den Lastkopf gegenüber der Widerlageranordnung können die Istwerte der Randbedingungen des Bauteils ermittelt werden.
Zur Verschiebung des Lastkopfes durch die Antriebsvorrichtung ist ein Regelkreis mit einem Prozeßrechner erforderlich, mit welchem durch Vergleich der Ist- und Sollwerte der Randbedingungen die Regelgröße für die Antriebseinrichtung bestimmt wird. Hierbei können die Sollwerte frei programmierbar vorgegeben werden. Somit können auch bei nichtlinearem Zusammenhang von Kraft- und Weggrößen durch schrittweise Verschiebung des Lastkopfes sämtliche mit dem Bauteil strukturmechanisch verträglichen Schnittgrößen, wie Kraft- und Weggrößen, und damit sämtliche Randbedingungen aufgebracht werden, so daß eine Bestimmung des Tragverhaltens des Bauteils in Abhängigkeit von den vorgewählten Randbedingungen möglich ist.

Die Regelung des Versuchs erfolgt in beliebig kleinen Belastungsstufen. Für die Steuerung der Verschiebung des Lastkopfes von einer Belastungsstufe i zur Belastungsstufe i + 1 müssen die Schnittgrößen für die Belastungsstufe i vorgegeben werden. Außerdem wird vor Versuchsbeginn für die erste Belastungsstufe die Steifigkeitsmatrix geschätzt oder durch planmäßige Vorbelastung experimentell ermittelt. Aus dem Zusammenhang zwischen der Verschiebung des Lastkopfes und den von der Antriebseinrichtung auf den Lastkopf aufgebrachten gemessenen Kraftgrößen kann durch weitere Laststufen das Tragverhalten des Bauteils und damit dessen momentane Steifigkeitsmatrix stufenweise aktualisiert werden.

Unabhängig von der Art der Ausführungsform führt die Erfindung zu einer Prüfvorrichtung, die gegenüber den bekannten Anordnungen weniger steif ausgeführt sein kann. Dies ist möglich, weil die gegenseitigen Verschiebungen der Schnittflächen des Bauteils gemessen werden. Da eine vergleichsweise geringe Steifigkeit des Prüfgestells nicht die Meßunsicherheit bei der Prüfung beeinflußt, kann das Prüfgestell kostengünstiger gefertigt werden.

Eine sehr einfache Ausführungsform ergibt sich, wenn als Antriebseinrichtung je Freiheitsgrad ein längsverschiebbares Belastungspendel vorgesehen ist, welches mit einem Ende am Prüfgestell und mit dem anderen Ende am Lastkopf angelenkt ist. Für ebene Versuchsanordnungen sind drei Belastungspendel erforderlich, während räumliche Anordnungen sechs Belastungspendel erforderlich machen. Derartige Belastungspendel sind längsverschiebbare Stabelemente zur Erzeugung von Zug- und Druckkräften.

Eine betriebssichere Bauweise ergibt sich, wenn die Belastungspendel als beidseitig beaufschlagbare hydraulische Kolbenzylinderanordnungen ausgebildet sind. Zwar können die Belastungspendel auch als mechanische Spindeln ausgeführt sein, jedoch stellen hydraulisch antreibbare Kolbenzylinderanordnungen einfachere und kostengünstigere Lösungen dar. In einer weiteren Ausführungsform ist der Lastkopf als Plattenanordnung ausgebildet, an deren Randbereichen die Belastungspendel angelenkt sind. Eine solche Plattenanordnung ermöglicht die notwendige feste Verbindung zu dem zu prüfenden Bauteil. Die Belastungspendel sind an den Randbereichen angelenkt, so daß Neigungen und Verdrehungen des Lastkopfes möglich sind.

Zweckmäßig ist es, wenn zur vektoriellen Bestimmung der auf den Lastkopf aufgebrachten Kraftgrößen an jedem Belastungspendel zwei im axialen Abstand angeordnete Kraftaufnehmer für die Messung der Normalkräfte und Biegemomente in zwei Querschnitten des Belastungspendels sowie einen Wegaufnehmer vorgesehen sind. Zur Bestimmung des Betrages der Kraftgrößen dienen die Kraftaufnehmer, während die Wegaufnehmer zur Messung der Kraftrichtung erforderlich sind. Dies ist möglich, weil die Belastungspendel einendig ortsfest am Prüfgestell angelenkt sind. Unter Vernachlässigung der Reibkräfte in den Gelenken der Belastungspendel genügt die Messung ihrer Normalkräfte, jedoch können die Reibkräfte in der vorgesehenen Ausführungsform kompensiert werden, da durch Bestimmung der Biegemomente in zwei Querschnitten der Belastungspendel deren Querkräfte berechenbar sind.

Eine weitere Ausführungsform ergibt sich, wenn der Lastkopf aus zwei im wesentlichen deckungsgleichen Platten besteht, von denen eine Platte die Auflagerfläche aufweist und die andere Platte mit der Antriebseinrichtung verbunden ist, und wenn zwischen den Platten Kraftmeßelemente angeordnet sind. Auf diese Weise kann die Antriebseinrichtung ohne Kraftmeßeinrichtungen ausgeführt sein.

Vorteilhaft ist es, wenn zur Bestimmung der räumlichen Verschiebung der Auflagerfläche je Freiheitsgrad ein Meßpendel zwischen dem Lastkopf und der gegenüberliegenden Widerlageranordnung eingebaut ist. Fur räumliche Versuchsanordnungen sind somit sechs Meßpendel erforderlich. Mit Hilfe der Meßpendel wird die gegenseitige Verschiebung der Schnittflächen bzw. der Auflagerpunkte des zu prüfenden Bauteils erfaßt. Derartige Meßpendel sind längsverschiebbare Stabelemente mit Wegaufnehmer.

Weiterhin ist es möglich, daß die dem Lastkopf gegenüberliegende Widerlageranordnung als weiterer Lastkopf ausgebildet ist, welcher von einer weiteren Antriebseinrichtung räumlich verstellbar ist. Hierdurch wird der Bereich möglicher gegenseitiger Verdrehung der endseitigen Schnittflächen des Bauteils erweitert. Bei gleicher Anzahl von Freiheitsgraden kann hierbei, gegenüber einer Vorrichtung mit nur einem Lastkopf, die Hälfte der Belastungspendel als beidendig angelenkte Stabelemente ohne Längsverschiebung ausgeführt werden. Durch die unmittelbare Verdrehung beider Schnittflächen des Bauteils können die Querabmessungen der Prüfvorrichtungen kleiner ausgeführt sein.

Gemäß der Erfindung sind Ausführungsformen der Prüfvorrichtung möglich, mit welchen Bauteile mit mehr als zwei Schnittflächen geprüft werden können.

Beispielsweise können zwei feste Widerlageranordnungen für jeweils eine Schnittfläche und ein Lastkopf für eine weitere Schnittfläche des Bauteils vorgesehen sein. Für ein Bauteil mit drei Schnittflächen kann ebenso eine Prüfvorrichtung mit drei voneinander unabhängig verschiebbaren Lastköpfen vorgesehen sein. Für komplizierte Bauteile können entsprechende Prüfvorrichtungen in beliebiger Kombination von Lastköpfen und/oder Widerlagern ausgeführt werden.

Die Erfindung wird anhand in der Zeichnung schematisch dargestellter Ausführungsbeispiele nachstehend näher erläutert.

Es zeigen :
- Fig. 1: eine Seitenansicht der neuen Prüfvorrichtung mit einer oberen festen Widerlageranordnung,
- Fig. 2: ein Blockschaltbild der Regelungseinrichtung für die erfindungsgemäße Prüfvorrichtung nach Fig. 1,
- Fig. 3: eine Seitenansich einer Prüfvorrichtung in einer gegenüber Fig. 1 veränderten Ausführungsform mit zwei voneinander unabhängigen Lastköpfen und
- Fig. 4: einen Ausschnitt aus einer gegenüber Fig. 1 und 2 veränderten Prüfvorrichtung mit einem aus zwei Platten bestehenden Lastkopf.

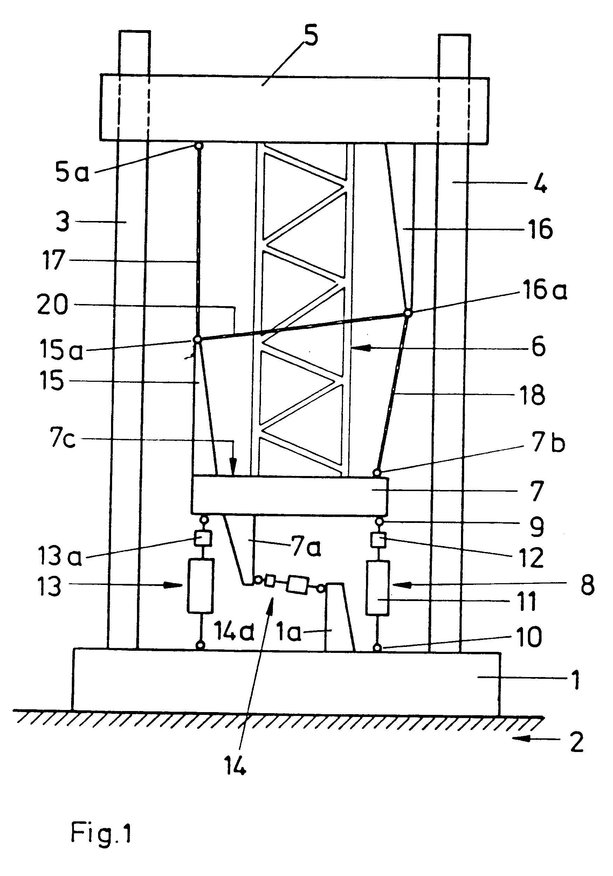

Bei der in Fig. 1 dargestellten Prüfvorrichtung besteht das Prüfgestell aus einer Grundplatte 1, welche auf einem Fundament 2 aufliegt. Weiterhin sind mit der Grundplatte 1 verbundene senkrechte Träger 3 und 4 vorgesehen, welche am oberen Ende mit einem höhenverschiebbaren Widerlager 5 verbunden sind. Das zu prüfende Bauteil 6 ist an seiner unteren Schnittfläche mit einem als Plattenanordnung ausgeführten Lastkopf 7 fest verbunden. Das obere freie Ende des Bauteils 6 stützt sich am Widerlager ab.

Am Lastkopf 7 ist ein Belastungspendel 8 mit seinem oberen freien Ende am Gelenkpunkt 9 befestigt. Das untere freie Ende des Belastungspendels 8 ist am Gelenkpunkt 10 mit der Grundplatte 1 verbunden. Das Belastungspendel 8 ist nur längsverschiebbar und zu diesem Zweck mit einer hydraulisch antreibbaren Kolbenzylinderanordnung 11 ausgerüstet. Zur Messung von Normalkräften und Biegemomenten in zwei im Abstand angeordneten Querschnitten des Belastungspendels 8 und zur Messung der Längsverschiebung des Belastungspendels 8 ist ein Meßaufnehmer 12 vorgesehen, welcher aus geeigneten Kraft- und Wegaufnehmern besteht.

In gleicher Weise wie das Belastungspendel 8 ist das Belastungspendel 13 ausgeführt, welches ebenfalls an der Lastplatte 7 und an der Grundplatte 1 angelenkt ist. Weiterhin ist ein zu den Belastungspendeln 8 und 13 baugleiches Belastungspendel 14 vorgesehen, welches einerseits an einem nach unten vorspringenden Stützhebel 7a der Lastplatte 7 und andererseits an einem nach oben vorspringenden Stützhebel 1a der Grundplatte 1 angelenkt ist. Am Lastkopf 7 ist außerdem ein nach oben gerichteter Stützarm 15 befestigt. Ein weiterer Stützarm 16 ist am Widerlager 5 befestigt und nach unten gerichtet. Zwischen dem freien Ende 15a des Stützarms 15 und dem Punkt 5a am Widerlager 5 ist ein Meßpendel 17 zur Abstandsmessung zwischen den Punkten 5a und 15a angeordnet. Ein weiteres Meßpendel 18 ist zwischen den Punkten 7b der Lastplatte 7 und dem freien Ende 16a des Stützarms 16 vorgesehen. Ein drittes Meßpendel 20 befindet sich zwischen den Punkten 15a und 16a. Diese Meßpendel sind längsverschiebbare Stabelemente mit einem Wegaufnehmer.

Die in Fig. 1 dargestellte Prüfvorrichtung ist für drei Freiheitsgrade eingerichtet. Hierbei handelt es sich also um eine ebene Versuchsanordnung. Durch entsprechende Längsverschiebungen der Belastungspendel 8, 13 und 14 können sämtliche Randbedingungen über den Lastkopf 7 auf das zu prüfende Bauteil 6 aufgebracht werden. Die Belastung erfolgt hierbei in beliebig kleinen Stufen, wobei für die erste Belastungsstufe die Steifigkeitsmatrix für das Bauteil geschätzt werden muß. Durch geeignete Verschiebung der Belastungspendel 8, 13 und 14 gegenüber dem Ausgangszustand am Versuchsbeginn bei unbelasteten Bauteil 6 können alle mit diesem verträglichen Last- und Weggrößen und somit auch alle Randbedingungen aufgebracht werden. Die aus den Lastkopf 7 wirkenden Kräfte werden durch die Meßaufnehmer der Belastungspendel 8, 13 und 14 erfaßt. Hierbei werden die Normalkräfte sowie an zwei verschiedenen Querschnitten die Biegemomente in den Belastungspendeln gemessen, so daß deren Querkräfte ebenfalls bestimmbar sind. Bei reibfreien Gelenken 9 und 10 des Belastungspendels 8 und den entsprechenden Gelenken der Belastungspendel 13 und 14 würde die Messung der Normalkräfte in den Belastungspendeln genügen. Zur Erfassung der Reibung in den Gelenkpunkten werden die weiteren Kraftgrößen benötigt, so daß durch entsprechende Kompensation der Reibkräfte diese eliminiert werden und somit keinen Meßfehler verursachen. Die räumliche Verschiebung der Auflagerfläche 7c für das Bauelement 6 auf dem Lastkopf 7 wird mit Hilfe der Meßpendel 17, 18 und 20 bestimmt.

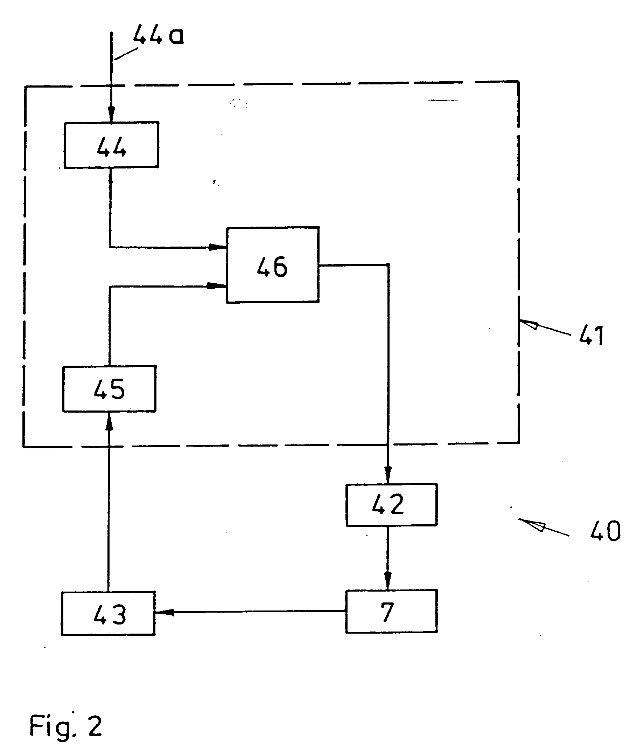

Sämtliche Meßwerte der Meßpendel und Meßaufnehmer in den Belastungspendeln werden einem in Fig. 2 dargestellten Prozeßrechner 41 zugeführt, welcher einen Teil einer Regelungseinrichtung 40 bildet. Hierbei wird der Lastkopf 7 von der Antriebseinrichtung 42 betätigt, welche aus den Belastungspendein 8, 13, 14 in Fig. 1 besteht. Die räumlichen Verschiebungen des Lastkopfes 7 werden von der Meßeinrichtung 43 erfaßt, welche die in Fig. 1 dargestellten Kraft- und Meßaufnehmer 12, 13a, 14a, 17, 18, 20 umfaßt. Die Regelungseinrichtung 40 enthält weiterhin die Programmodule 44, 45, 46 des Prozeßrechners 41.

Die Randbedingungen für das zu prüfende Bauteil 6 können gemäß Pfeil 44a in Fig. 2 frei programmierbar dem Modul 44 zugeführt werden. Die Meßwerte der räumlichen Verschiebung des Lastkopfes 7 werden von der Meßeinrichtung 43 dem Modul 45 übergeben. Diese im Modul 45 enthaltenen und geeignet umgeformten Istwerte der Randbedingungen werden mit den entsprechenden Sollwerten des Moduls 44 einem weiterem Modul 46 zugeführt, in welchem die Regelgröße für die Antriebseinrichtung 42 ermittelt wird.

Die Regelung erfolgt schrittweise, um auch bei nichtlinearen Zusammenhängen zwischen Kraft- und Weggrößen, also im plastischen Bereich des zu prüfenden Bauteils, dessen Tragverhalten bestimmen zu können. Auf diese Weise kann eine vor Versuchsbeginn für die erste Belastungsstufe geschätzte Steifigkeitsmatrix stufenweise ermittelt werden.

Die Untersuchung eines Bauteils mit lastabhängigen Randbedingungen läßt sich mit der neuen Prüfvorrichtung durch geeignete Programmierung durchführen. Hierbei werden die Randbedingungen nicht gemäß Pfeil 44a fest eingestellt, sondern werden in einer überlagerten Programmschleife in Abhängigkeit vom experimentellen Ergebnis als variable Sollwerte vorgegeben. Somit kann das Verhalten eines gesamten Tragwerkes bestimmt werden, das in einen experimentell in der Prüfvorrichtung und in einem nur rechnerisch behandelten Abschnitt zerlegt wird, wobei die Schnittgrößen iterativ ermittelt werden.

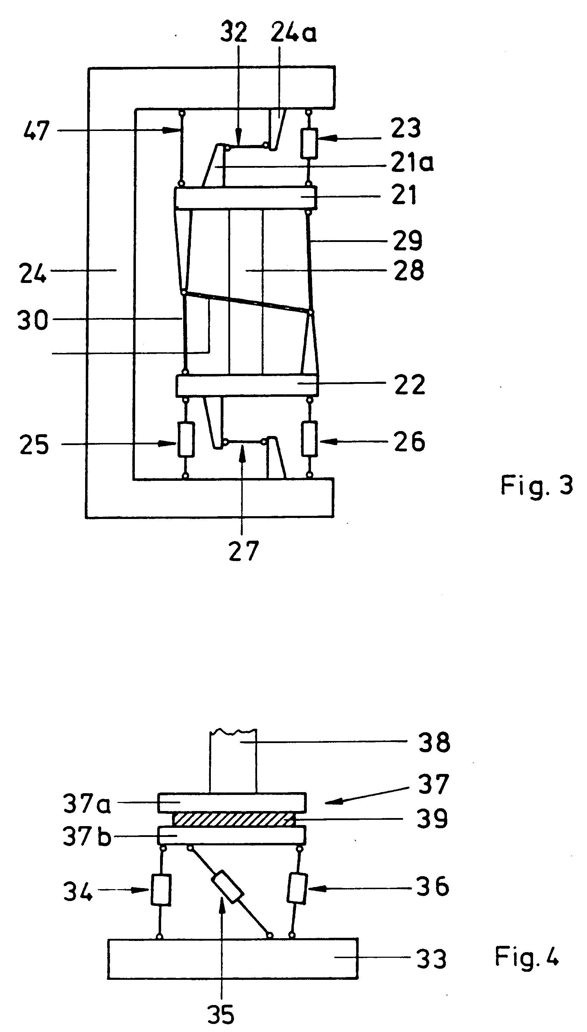

Fig. 3 zeigt in vereinfachter Darstellung eine Prüfvorrichtung, welche anstelle eines festen Widerlagers mit einem zweiten Lastkopf 21 ausgerüstet ist. Ein längsverschiebbares Belastungspendel 23 ist einerseits am Lastkopf 21 und andererseits am Prüfgestell 24 angelenkt. Außerdem ist zwischen den Endpunkten eines Stützhebels 21a des Lastkopfes 21 ein Belastungspendel 32 angelenkt, welches in der Länge jedoch nicht verschiebbar ist.

Der untere Lastkopf 22 ist mit dem längsverschiebbaren Belastungspendeln 25 und 26 sowie mit einem starren Belastungspendel 27 verbunden. Ein zu prüfendes Bauteil 28 ist an seinen Enden jeweils mit den Lastköpfen 21 und 22 fest verbunden. Zur Bestimmung der gegenseitigen Verschiebung der Lastköpfe 21 und 22 dienen Meßpendel 29, 30 und 31, die ähnlich wie bei der Ausführungsform gemäß Fig. 1 angeordnet sind.

Bei der Prüfvorrichtung nach Fig. 3 handelt es sich ebenfalls um eine ebene Versuchsanordnung. Ebenso wie bei der Fig. 1 sind für die Lastkopfe 21 und 22 insgesamt drei längsverschiebbare Belastungspendel erforderlich. Bei gleicher Anzahl von Freiheitsgraden können die Belastungspendel 27, 32 und 47 starr ausgeführt werden. Da bei der Prüfvorrichtung nach Fig. 3 beide Schnittflächen des Bauteils 28 jeweils gegeneinander geneigt werden können, benötigt diese Vorrichtung nur einen geringen Raumbedarf senkrecht zur Längsachse des Bauteils 28.

Durch den Ersatz von starren Belastungspendeln durch längsverschiebbaren Belastungspendel kann der Raumbedarf weiter eingeschränkt werden.

Fig. 4 zeigt einen Ausschnitt aus einer gegenüber Fig. 1 und 3 veränderten Prüfvorrichtung. Auf einer Grundplatte 33 sind die unteren Enden von Belastungspendel 34, 35 und 36 angelenkt, während deren obere Enden an einem Lastkopf 37 angelenkt sind. Der Lastkopf 37 besteht aus einer oberen Platte 37a sowie einer unteren Platte 37b mit den Anlenkpunkten der Belastungspendel 34, 35 und 36. Die obere Platte 37a des Lastkopfes 37 ist mit einem nur abschnittsweise dargestellten zu prüfenden Bauteil 38 fest verbunden. Zwischen den Platten 37a und 37b des Lastkopfes 37 befindet sich eine Mehrkomponenten-Kraftmeßeinrichtung 39, mit welcher die auf den Lastkopf 37 wirkenden Größen bestimmt werden können. Auf diese Weise kann auf die im Zusammenhang mit Fig. 1 beschriebenen Meßaufnehmer in den Belastungspendeln verzichtet werden.

## Patentansprüche

1. Prüfvorrichtung für stabförmige Bauteile, insbesondere Tragwerksabschnitte des Ingenieurbaus, im wesentlichen bestehend aus einem Prüfgestell mit wenigstens einer Widerlageranordnung zur Abstützung der auf das zu prüfende Bauteil wirkenden Kräfte, aus wenigstens einem mit einer Antriebsvorrichtung verbundenen verschiebbaren Lastkopf zur Einleitung der Lasten in das Bauteil sowie aus Meßeinrichtungen zur Bestimmung der von der Antriebseinrichtung auf den Lastkopf aufgebrachten Kraftgrößen, dadurch gekennzeichnet, daß der Lastkopf (7, 21, 22, 37) eine Auflagerfläche (7c) aufweist, welche zur Einstellung frei wählbarer Randbedingungen des Bauteils (6, 28, 38) für eine beliebige Anzahl von Freiheitsgraden verschiebbar ist, und welche für sämtliche Randbedingungen fest mit dem Bauteil (6, 28, 38) verbindbar ist, daß die Meßeinrichtungen (12, 13a, 14a, 20) zur vektoriellen Bestimmung der Kraftgrößen für sämtliche Freiheitsgrade vorgesehen sind, daß weitere Meßeinrichtungen (17, 18, 20, 29, 30, 31) zur Bestimmung der räumlichen Verschiebungen der Auflagerfläche (7c) zur gegenüberliegenden Widerlageranordnung (5) eingebaut sind, und daß zur Verschiebung des Lastkopfes (7, 21, 22, 37) eine Regelungseinrichtung (40) vorgesehen ist, in welcher aus den von den Meßeinrichtungen (43) ermittelten Meßwerten und den vorgewählten Sollwerten der Randbedingungen in einem Prozeßrechner (41) eine Regelgröße für die Antriebseinrichtung (42) ableitbar ist.

2. Prüfvorrichtung nach Anspruch 1, dadurch gekennzeichnet, daß als Antriebseinrichtung je Freiheitsgrad ein längsverschiebbares Belastungspendel (8, 13, 14, 22, 23, 25, 26, 34, 35, 36) vorgesehen ist, welches mit einem Ende am Prüfgestell und mit dem anderen Ende am Lastkopf (7, 21, 22, 37) angelenkt ist.

3. Prüfvorrichtung nach Anspruch 2, dadurch gekennzeichnet, daß die Belastungspendel (8) als beidseitig beaufschlagbare hydraulische Kolbenzylinderanordnungen (11) ausgebildet sind.

4. Prüfvorrichtung nach Anspruch 2 oder 3, dadurch gekennzeichnet, daß der Lastkopf (37) als Plattenanordnung ausgebildet ist, an deren Randbereichen die Belastungspendel (8, 13, 14) angelenkt sind.

5. Prüfvorrichtung nach einem der Ansprüche 2 bis 4, dadurch gekennzeichnet, daß zur vektoriellen Bestimmung der auf den Lastkopf (7) aufgebrachten Kraftgrößen an jedem Belastungspendel (8, 13, 14) zwei im axialen Abstand angeordnete Kraftaufnehmer für die Messung der Normalkräfte und Biegemomente in zwei Querschnitten des Belastungspendels sowie ein Wegaufnehmer vorgesehen sind.

6. Prüfvorrichtung nach einem der vorhergehenden Ansprüche, dadurch gekennzeichnet, daß der Lastkopf (37) aus zwei im wesentlichen deckungsgleichen Platten (37a, 37b) besteht, von denen eine Platte (37a) die Auflagerfläche aufweist und die andere Platte (37b) mit der Antriebseinrichtung verbunden ist, und daß zwischen den Platten (37a, 37b) Kraftmeßelemente (39) für eine den Freiheitsgraden entsprechende Anzahl von Komponenten angeordnet sind.

7. Prüfvorrichtung nach einem der vorhergehenden Ansprüche, dadurch gekennzeichnet, daß zur Bestimmung der räumlichen Verschiebung der Auflagerfläche (7c) je Freiheitsgrad ein Meßpendel (17, 18, 20) zwischen dem Lastkopf (7) und der gegenüberliegenden Widerlageranordnung (5) eingebaut ist.

8. Prüfvorrichtung nach einem der vorhergehenden Ansprüche, dadurch gekennzeichnet, daß die dem Lastkopf (22) gegenüberliegende Widerlageranordnung als weiterer Lastkopf (21) ausgebildet ist, welcher von einer weiteren Antriebsvorrichtung räumlich verstellbar ist.

## Claims

1. Testing apparatus for rod shaped structural components, particularly supporting structure segments of an engineering structure, substantially comprising a testing support with at least one abutment arrangement for supporting the forces being applied to the structural component being tested, at least one shiftable load head connected to a propulsion device for introducing the loads into the structural component, as well as measuring devices for determining the values of force applied by the propulsion device to the load head, characterized in that the load head (7, 21, 22, 37) has a support surface (7c) which can be shifted at any number of degrees of freedom for setting any desired boundary conditions of the structural component (6, 28, 38) and which can be fixed to the structural component (6, 28, 38) for all boundary conditions; that the measuring devices (12, 13a, 14a, 20) are provided for vectorially determining the values of force for all degrees of freedom; that further measuring devices (17, 18, 20, 29, 30, 31) are built in for determining the spatial shifting of the support surface (7c) compared with the opposing abutment arrangement (5); and that for shifting the load head (7, 21, 22, 37), a control device (40) is provided, in which a controlled condition for the propulsion device (42) can be derived from the measurement values gained from the measuring devices (43) and the preselected desired values of the boundary conditions in a process computer (41).

2. Testing apparatus according to claim 1, characterized in that as propulsion device, for every degree of freedom, a longitudinally shiftable loading pendulum (8, 13, 14, 22, 23, 25, 26, 34, 35, 36) is provided which is pivoted at one end to the testing support and at the other end to the load head (7, 21, 22, 37).

3. Testing apparatus according to claim 2, characterized in that each loading pendulum (8) is a both side loadable hydraulic piston cylinder arrangement (11).

4. Testing apparatus according to claim 2 or 3, characterized in that the load head (37) is a plate arrangement, each loading pendulum (8, 13, 14) is pivoted at the peripheries of said plate arrangement.

5. Testing apparatus according to one of the claims 2 to 4, characterized in that for vectorially determining the values of force applied to the load head (7), each loading pendulum (8, 13, 14) comprises a displacement pick up and two force receivers arranged at an axial distance for the measurement of the normal forces and bending moments in two cross sections of the loading pendulum.

6. Testing apparatus according to one of the preceding claims, characterized in that the load head (37) comprises two plates (37a, 37b) which are substantially coincident, one plate (37a) of which comprises the support surface and the other plate (37b) is connected to the propulsion device, and that between the plates (37a, 37b) force measuring elements (39) are positioned for a number of components according to the degrees of freedom.

7. Testing apparatus according to one of the preceding claims, characterized in that one measuring pendulum (17, 18, 20) for each degree of freedom is built in between the load head (7) and the opposing abutment arrangement (5) for determining the spatial shifting of the support surface (7c).

8. Testing apparatus according to one of the preceding claims, characterized in that the abutment arrangement opposite the load head (22) forms another load head (21), which can be spatially shifted by a further propulsion device.

## Revendications

1. Dispositif d'essai pour éléments de construction en forme de barre, en particulier des parties d'armature porteuse d'un ouvrage d'art, comportant principalement un bâti d'essai avec au moins un organe de butée destiné à recevoir les efforts agissant sur l'élément en cours d'essai, au moins une tête de charge déplaçable reliée à un dispositif de commande en vue d'exercer les efforts sur ledit élément, ainsi que des dispositifs de mesure pour la détermination des valeurs des efforts appliqués sur ladite tête de charge par le dispositif de commande, caractérisé en ce que la tête de charge (7, 21, 22, 37) présente une surface d'appui (7c) qui est déplaçable en vue du réglage de conditions aux limites pouvant être choisies arbitrairement pour ledit élément (6, 28, 38) pour un nombre quelconque de degrés de liberté, et qui peut être rendue solidaire dudit élément (6, 28, 38) pour toutes ces conditions aux limites, en ce que les dispositifs de mesure (12, 13a, 14a, 20) sont prévues en vue de la détermination vectorielle des valeurs des forces pour tous les degrés de liberté prévus, en ce que des dispositifs de mesure complémentaires (17, 18, 20, 29, 30, 31) sont incorporés en vue de la détermination des déplacements dans l'espace de la surface d'appui (7c) par rapport à l'organe de butée (5) qui lui fait face, et en ce qu'on prévoit pour le déplacement de la tête de charge (7, 21, 22, 37) un dispositif de régulation (40) dans lequel on peut déterminer au moyen d'un calculateur (41) une grandeur de régulation pour le dispositif de commande à partir des valeurs des mesures transmises par les dispositifs de mesure (43) et des valeurs assignées choisies au préalable pour les conditions aux limites.

2. Dispositif d'essai selon la revendication 1, caractérisé en ce qu'on prévoit comme dispositif de commande pour chaque degré de liberté, un pendule de charge (8, 13, 14, 22, 23, 25, 26, 34, 35, 36) déplaçable longitudinalement qui est articulé sur le bâti d'essai par l'une de ses extrémités et sur la tête de charge (7, 21, 22, 37) par l'autre de ses extrémités.

3. Dispositif d'essai selon la revendication 2, caractérisé en ce que les pendules de charge (8) sont réalisés sous la forme de dispositifs à vérins hydrauliques (11) qui peuvent être chargés à leurs deux extrémités.

4. Dispositif d'essai selon l'une des revendications 2 ou 3, caractérisé en ce que la tête de charge (31) est réalisée sous la forme d'un dispositif à platines aux zones périphériques de laquelle sont articulés les pendules de charge (8, 13, 14).

5. Dispositif d'essai selon l'une des revendications 2 à 4, caractérisé en ce qu'il est prévu sur chaque pendule de charge (8, 13, 14), pour la détermination vectorielle des valeurs des forces appliquées sur la tête de charge (7), deux enregistreurs d'effort disposés axialement à une certaine distance l'un de l'autre, pour la mesure des efforts normaux et des moments de flexion dans deux sections transversales du pendule de charge, ainsi qu'un enregistreur de déplacement.

6. Dispositif d'essai selon l'une des revendications ci-dessus, caractérisé en ce que la tête de charge (37) est constituée par deux platines (37a, 37b) sensiblement de même surface, dont l'une (37a) comporte la surface d'appui et l'autre (37b) est reliée au dispositif de commande, et en ce que des éléments de mesure des efforts (39) par un nombre de composantes correspondant aux degrés de liberté, sont disposés entre lesdites platines.

7. Dispositif d'essai selon l'une des revendications ci-dessus, caractérisé en ce qu'un pendule de mesure (17, 18, 20) est disposé entre la tête de charge (7) et l'organe de butée (5) qui lui fait face en vue de la détermination du déplacement dans l'espace de ladite surface d'appui (7c) pour chacun des degrés de liberté.

8. Dispositif d'essai selon l'une des revendications ci-dessus, caractérisé en ce que l'organe de butée faisant face à la tête de charge (22) est réalisé lui-même sous la forme d'une autre tête de charge (21) qui est déplaçable par un autre dispositif de commande.
